# EUROPEAN PATENT APPLICATION

(11) **EP 0 587 089 A2**
(43) Date of publication of application: **16.03.1994**
(21) Application number: 93114266.5
(22) Date of filing: 06.09.1993
(51) Int. Cl.: G06F 9/44

(54) **Data processing system for executing altered program**

(30) Priority: 07.09.1992 JP 237908/92
(71) Applicant: FUJITSU LIMITED, Kawasaki-shi, Kanagawa 211 (JP)
(72) Inventor: Ryu, Tadamitsu, c/o Fujitsu Limited, Kawasaki-shi, Kanagawa, 211 (JP); Ichikawa, Naomi, c/o Fujitsu Limited, Kawasaki-shi, Kanagawa, 211 (JP); Tojima, Tetsuo, c/o Fujitsu Network Eng., Ltd., Kawasaki-shi, Kanagawa, 213 (JP); Toyota,Masanobu c/o Fujitsu Network Eng., Ltd., Kawasaki-shi, Kanagawa, 213 (JP); Adachi, Takeshi, c/o Fujitsu Network Eng., Ltd., Kawasaki-shi, Kanagawa, 213 (JP)
(74) Representative: Lehn, Werner, Dipl.-Ing.

(57) **Abstract**

A data processing system executes a process corresponding to a combination of objects, each of the objects (213) being a single processing unit and/or a complex processing unit in which processing units are combined. In the data processing system, the combination of objects (213, 230) including at least one altered object (230) which is an object corresponding to a function to be altered is obtained, and a process is then executed in accordance with an altered program corresponding to the above combination of the objects (213, 230).

## Description

### BACKGROUND OF THE INVENTION

### (1) Field of the invention

The present invention relates to a data processing system in which altered program made by inserting altered objects into a current program is executed.

### (2) Description of related art

A decentralized data processing system has been proposed. In the decentralized data processing system, terminals each of which has a program and/or a data base are linked with each other by a LAN (Local Area Network) or a switched network. Each terminal may receive data of the program and/or the data base from another terminal and may execute it.

There is a case where it is necessary for the centralized data processing system to alter programs so that new functions are introduced into a terminal station or so that a terminal station receiving states and other information of another terminal station is changed to another one based on a predetermined processing condition of the another terminal station. In a case, as described above, where the alternation must be performed for a terminal station, the alteration has been conventionally performed as will be described below.

In a first case (i), a person goes to a terminal in which the alteration must be done, due to the operations by the person, current functions are transmitted to a floppy disk, and information to be transmitted is stored in the floppy disk. The person brings back the floppy disk to a service center and considers a counterplan based on the information stored in the floppy disk. In a second case (ii), a person goes to a terminal in which the alteration must be done, the current system is temporarily terminated, and predetermined checks and alteration are carried out in the terminal station by the person.

In the above conventional cases (i) and (ii), when a case where an alteration must be done occurs in a terminal station, the person must go to the terminal station. In addition, prodigious labor is needed for the person to perform the checks and alteration.

### SUMMARY OF THE INVENTION

Accordingly, a general object of the present invention is to provide a novel and useful data processing system in which the disadvantages of the aforementioned prior art are eliminated.

A more specific object of the present invention is to provide a data processing system in which altered objects can be introduced into a terminal station in the system via or not via the LAN or the switched network so that the required alteration for the terminal station can be performed.

The above objects of the present invention are achieved by a data processing system for executing a process corresponding to a combination of objects, each of the objects being a single processing unit and/or a complex processing unit in which processing units are combined, the data processing system comprising: first means for obtaining the combination of objects including at least one altered object which is an object corresponding to a function to be altered; and second means for executing a process in accordance with an altered program corresponding to the combination of the objects obtained by the first means.

According to the present invention, the altered object is obtained by, for example, the transmission via the LAN and the switched network, so that the altered program can be executed. A complex program corresponding to objects complexly combined can be altered based on the combination of object inclduing the altered object.

Additional objects, features and advantages of the present invention will become apparent from the following detailed description when read in conjunction with the accompanying drawings.

### BRIEF DESCRIPTION OF THE DRAWINGS

FIG.1 is a block diagram illustrating the principle of a data processing system according to an embodiment of the present invention.

FIG.2 is a block diagram illustrating a process in which an altered object is introduced.

FIG.3 is a flow chart illustrating a process which is infected with the altered object under an online state.

FIG.4 is a diagram illustrating a process in accordance with an interpreter method in a case where the reconstitution of steps of the process is not needed.

FIG.5 in parts (A) and (B) is a diagram illustrating operation in accordance with the method shown in FIG.4.

FIG.6 is a method in accordance with which altered execution process data is generated and executed.

FIG.7 is a diagram illustrating a process in accordance with the interpreter method after reconstituting steps of the process.

FIG.8 is a diagram illustrating a model formed with respect to departments of a company.

FIG.9 is a diagram showing FIG.8 in an abstract form.

FIG.10 in parts (A), (B) and (C) is a diagram illustrating a capsule.

FIG.11 is a diagram illustrating an object as a model.

FIG.12 is a diagram illustrating the functions of the object as the model.

FIG.13 is a diagram illustrating a process of treating the object.

FIG.14 is a system block diagram showing the structure of a database system.

FIG.15 is a diagram illustrating a part of the operation of a dynamic object processor.

FIG.16 is a system block diagram illustrating the structure of a terminal station used in an embodiment of the data processing system according to the present invention.

FIG.17 in parts (A), (B) and (C) is a diagram illustrating the advantages of forming objects as capsules.

### DESCRIPTION OF THE PREFERRED EMBODIMENTS

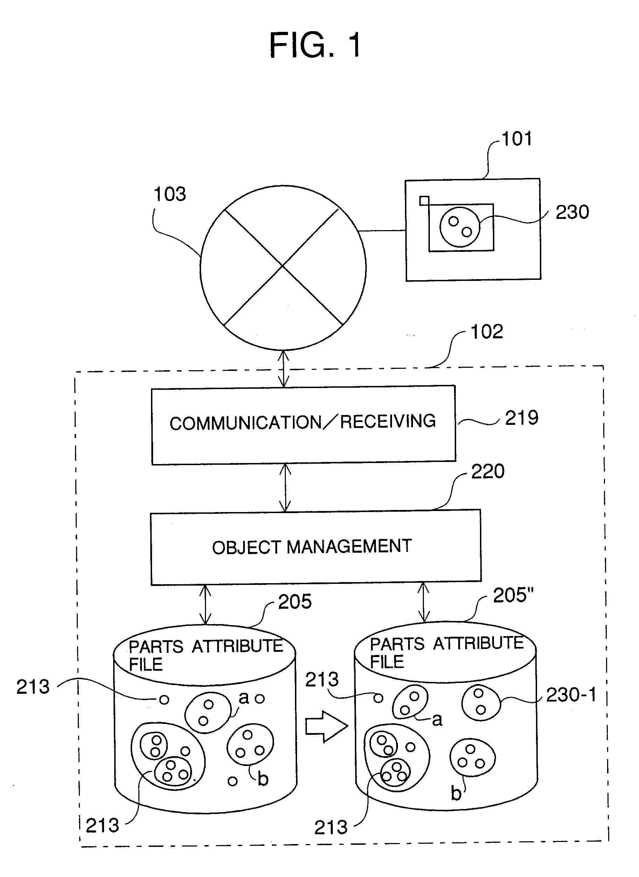

A description will now be given, with reference to FIG.1, of the principle of a data processing system according to an embodiment of the present invention.

Referring to FIG.1, a first terminal station 101 and a second terminal station 102 are linked with each other by a network 103 such as a LAN or a switched network. The second terminal station 102 is provided with a first parts attribute file 205, a second parts attribute file 205'', a communication/receiver portion 219 and an object management portion 220. An altered object may be introduced into the second parts attribute file 205''. The first terminal station 101 has an altered object 230. A reference number 230-1 indicates an altered object introduced into the second parts attribute file 205''.

A plurality of processing units are stored in the first parts attribute file 205 so that the second terminal station 102 displays current functions. A block including one or a plurality of processing units is referred to as an object. The object management portion 220 relates the processing units to each other so that a required process is realized. The altered object 230 may be used for altering the functions of the second terminal station 102. The altered object 230 is introduced into the second parts attribute file 205'' of the second terminal station 102, for example, via the network 103 such as the LAN or the switched network.

While the second terminal station 102 is performing the process, the status information of the second terminal station 102 is transmitted to the first terminal station 101 as follows. The transmission of the status information from the second terminal station 102 to the first terminal station 102 is performed taking an opportunity that the process executed by the second terminal station 102 has reached a predetermined condition.

First, the altered object 230 is transmitted from the first terminal station 101 to the second terminal station 102 and is stored in the parts attribute file 205 of the second terminal station 102. That is, the altered object 230-1 is introduced into the second terminal station 102. The second terminal station 102 may be operated in accordance with various procedures using the altered object 230-1 introduced therein. The second terminal station 102 is operated, for example, as follows.

In a case where the current process is performed in the second terminal station 102, it is assumed that;
(i) the object management portion 220 activates an object (a) shown in FIG.1;
(ii) the object (a) informs the object management portion 220 of the termination of a process after the process corresponding to the object (a) is completed;
(iii) after the object management portion 220 is informed of the termination of the process, an object (b) shown in FIG.1 is activated; and
   the object management 220 has previously prepared a combination of objects so that the current process can be executed.

In a case where the above combination exists, due to the addition of the altered object 230-1, the combination is changed as follows:
(i)' the object management portion 220 activates the object (a);
(ii)' after the process corresponding to the object (a) is completed, the object (a) informs the altered object 230-1 instead of the object management portion 220 of the termination of the process corresponding to the object (a);
(iii)' the altered object 230 is activated by the information of the termination of the process;
(iv)' after a process corresponding to the altered object 230-1 is completed, the altered object 230-1 informs the object management portion 220 of the termination of the process corresponding to the altered object 230-1; and
(v)' when the object management portion 220 is informed by the altered object 230-1, the object management portion 220 considers that the information of the termination of the process is supplied from the object (a) and activates the object (b).

The above altered object 230-1 is provided with a function for transmitting the status information of the second terminal station 102 to the first terminal station 101.

The object management portion 220 carries out a simulation with respect to the combination of objects including the altered object. If it is determined, based on the simulation, that the process can be normally performed with respect to the combination of objects including the altered object, the process actually is executed. For example, to maintain the combination of objects including the altered object as active, or to execute the process at a high speed based on the combination of objects including the altered object, a program having the combination of objects including the altered object is compiled so that altered execution process data in which data items are arranged in a sequential processing order (branch passes may be included) is generated.

The altered execution process data may be transmitted to the first terminal station 101 as it is. To recognize positions at which the data items are altered, and to decrease an amount of data to be transmitted, it is preferred that the data be transmitted as follows.

The execution process data obtained before the altered object 230-1 is introduced exists in the second terminal station 102 (this execution process data is referred to, for example, as non-altered execution process data). Thus, a difference between the altered execution process data and the non-altered execution process data is calculated, and the difference and the non-altered execution process data is transmitted to the terminal station 101. In this case, it is easy to return to the non-altered execution process data after the process corresponding to the altered object 230-1 is terminated. If the non-altered execution process data exists in the terminal station 101 also, only the differences may be transmitted to the terminal station 101.

A description will now be given of an embodiment of the present invention.

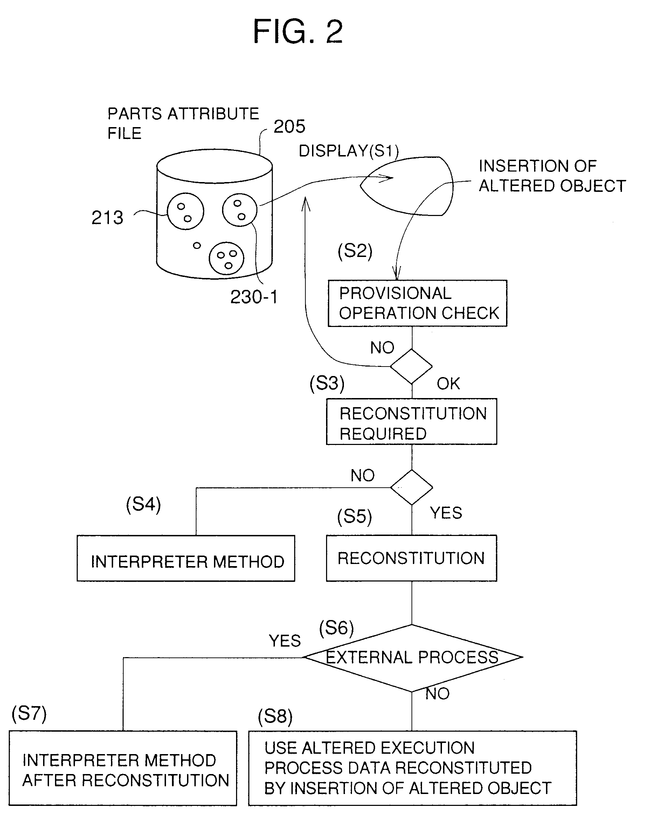

FIG.2 shows a process for inserting the altered object into the combination of objects. The parts attribute file 205 is provided with object 213 and the altered object 230-1. When the altered object 230-1 is stored in the parts attribute file 205, the following steps are executed.

In step S1, an object to be altered and the altered object are displayed on a screen, so that "the combination of objects including the altered object 230-1" is obtained.

In step S2, under a condition in which the process is performed on trial with respect to "the combination of objects including the altered object 230-1". It is then checked whether or not the process is normally performed (the process to be performed based on the combination of objects not including the altered object 230-1 is damaged or not). If the process is not normally performed, the introducing of the altered object 230-1 is reconsidered.

If it is determined, in step S2, that the process is normally performed, it is determined, in step S3, whether or not it is necessary to generate the altered executing processes data by the compile processing with respect to the program corresponding to "the combination of objects including the altered object 230-1". That is, it is determined whether or not it is necessary to reconstitute steps of the process.

If it is determined that it is necessary to reconstitute steps of the process, the steps of the process are reconstituted in step S4.

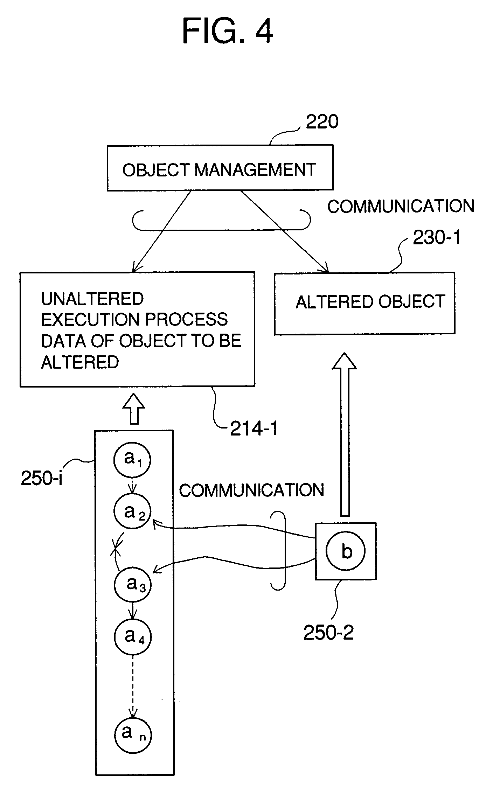

If it is determined, in step S3, that it is not necessary to reconstitute steps of the process, the process is performed in accordance with an interpreter method (see FIG.4) in step S5.

In a case where a large amount of altered execution process data is obtained by the reconstitution of the steps of the process, or in a case where the process into which the altered object is introduced is temporarily performed and the system must be rapidly returned to the process using the non-altered execution process data, an "additional mode" is performed. Thus, in step S6, it is determined whether or not the "external process" must be performed.

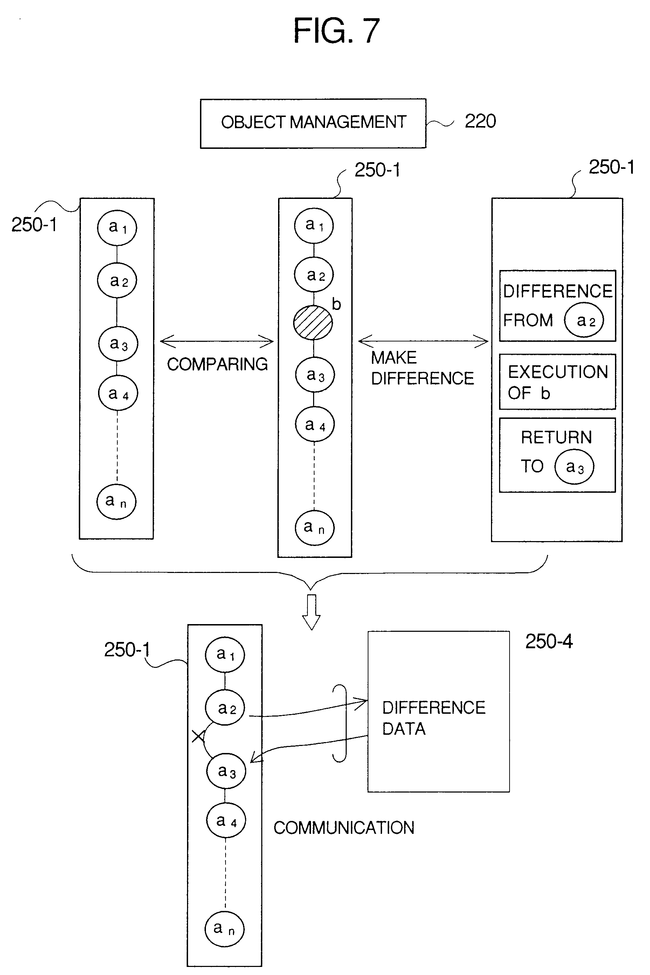

If it is determined, in step S6, that the "external process" must be performed, the process having the reconstituted steps is performed in accordance with the interpreter method (see FIG.7) in step S7.

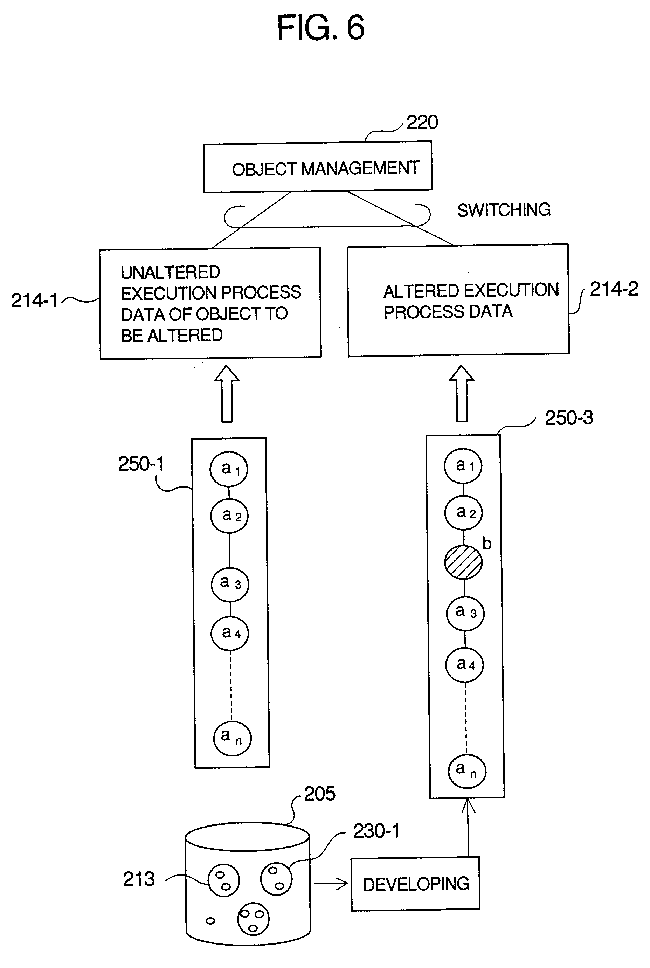

On the other hand, if it is determined, in step S6, that the "external process" need not be performed, the process is performed using the altered execution process data reconstituted by use of the altered object (see FIG.6) in step S8.

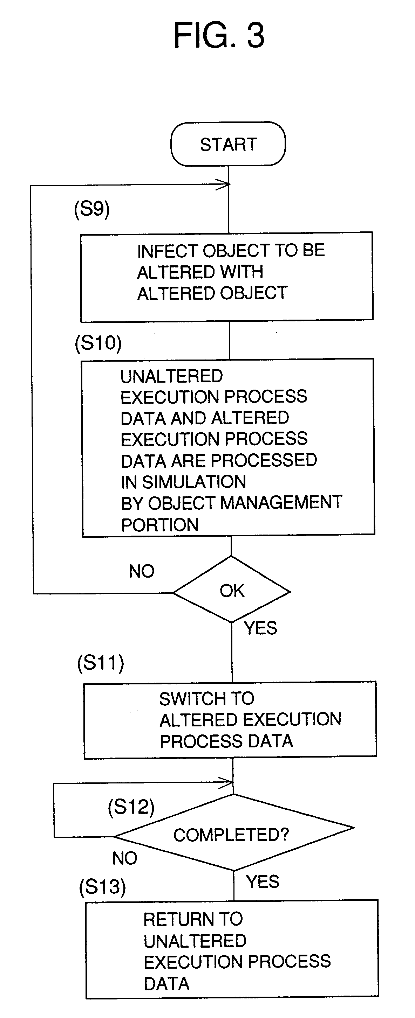

A process infected with an altered object is performed in an on-line mode as shown in FIG.3.

Referring to FIG.3, step S9 corresponds to the step S1 shown in FIG.2. In step S9, "the combination of objects including the altered object" is obtained. That is, the current objects are infected with the altered object so called "a virus object".

In step S10, in the simulation carried out by the object management portion 220, "the altered execution process data" obtained by "the combination of objects including the altered object" and "the non-altered execution process data" are simultaneously processed in the on-line mode. If a good result of the simulation is not obtained, the process returns step S9. On the other hand, if a good result of the simulation is obtained, the process proceeds to step S11.

In step S11, the current process is switched to a process using the altered execution process data in the on-line mode. That is, the process into which the altered object is introduced is performed.

In step S12, it is determined whether or not the process into which the altered object is introduced is completed.

If the process into which the altered object is introduced is completed, the process is switched back to the process using the original unaltered execution process data.

FIG.4 shows a process performed in accordance with the interpreter method in a case where the reconstitution of steps of the process is not needed.

The object management portion 220, the altered object 230-1, the unaltered execution process data 214-1, a processing unit set 250-1 corresponding to the unaltered execution process data 214-1, and a processing unit set 250-2 corresponding to the altered object 230-1 are shown in FIG.4. The processing unit set 250-1 includes processing units a1, a2, ..., and an, and the processing unit set 250-2 include a processing unit b. Each of the processing units a1, a2, ..., an and b consists of a instruction sequence including at least 10 steps. In a case shown in FIG.4, the unaltered execution process data 214-1 is divided into a first group including process units a1 and a2 and a second group including process units a3 to an. The object management portion 220 carries out the process as follows.

In a first operation, the object management portion 220 activates the unaltered execution process data 214-1.

In a second operation, due to the activation of the unaltered execution process data 214, the processing units a1 and a2 are executed in this order. Although, originally, the next processing unit a3 is executed after the processing units a1 and a2, the altered object 230-1 requests the object management portion 220 to inform the altered object 230-1 that the processing unit a2 has been performed, so that the processing unit a3 is not started.

In this case, in a third operation, the object management portion 220 activates the altered execution process data including processing unit b corresponding to the altered object 230-1. In other words, communication in which the processing unit a2 calls the processing unit b is performed.

In a fourth operation, the processing unit b is executed. That is, the unaltered execution process data is altered by introducing of the altered objects 230-1.

When the processing unit b is completed, the object management portion 220 is informed that the processing unit b is completed and activates the processing unit a3, in the fourth operation in a fifth operation. In other words, at the termination of the processing unit b, there is a communication in which the processing unit b calls the processing unit a3.

When the processing unit an is completed, the object management portion receives a termination information, in a sixth operation.

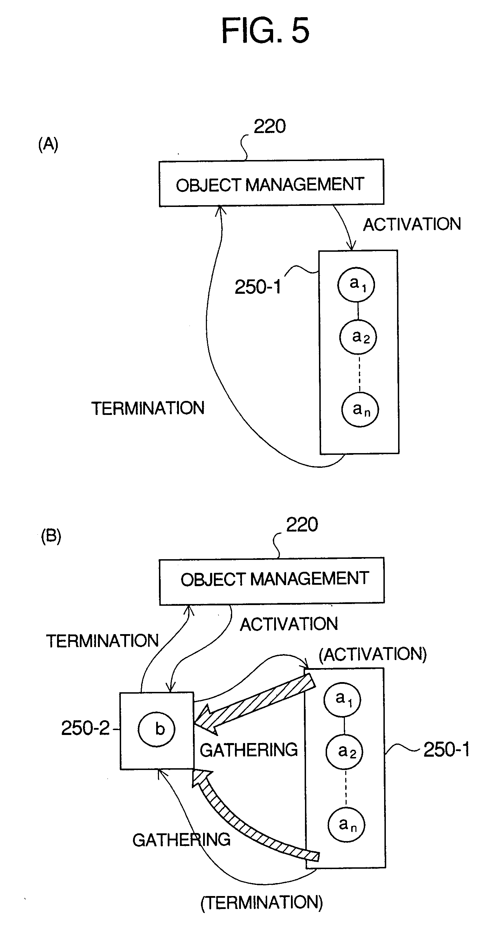

Examples of operations in accordance with the process shown in FIG.4 are shown in FIG.5(A) and (B). In FIG.5(A) and (B), those portions which are the same as those shown in FIG.4 are given the same reference numbers.

The object management portion 220 activates the unaltered execution process data 250-1 as shown in FIG.5(A). As a result, the processing units a1, a2, ..., and an are successively executed in this order. When the processing unit an is completed, the object management portion 220 receives the termination information from the unaltered execution process data 250-1.

On the other hand, the process including the processing unit b corresponding to the altered object 230-1 is performed as follows. The altered object 230-1 used in this case is formed so that parameters existing in the system immediately before the unaltered execution process data 250-1 is activated are gathered and parameters existing in the system immediately after the altered execution process data 250-1 is executed are gathered.

In this case, the altered object 230-1 causes the object management portion 220 to activate the altered object 230-1 when the object management portion 220 activates the unaltered execution process data 250-1, as shown in FIG.5(B). In a response to the activation of the altered object 230-1, the processing unit set 250-2 corresponding to the altered object 230-1 gathers parameters existing in the system immediately before the unaltered execution process data 250-1 is executed, and activates the unaltered execution process data. The unaltered execution process data 250-1 is instructed to supply termination information to the processing unit 250-2 corresponding to the altered object 230-1.

When the process of the unaltered execution process data 250-1 is completed, the unaltered execution process data 250-1 supplies the termination information to the altered object 230-1. The processing unit 250-2 then gathers parameters in the system immediately after the unaltered execution process data 250-1 has been processed, and informs the object management portion 220 of the termination. Thus, due to the introducing of the altered object 230-1. the parameters in the system can be gathered.

FIG.6 shows a method for generating the altered execution process data and for processing it. In FIG.6, those those portions which are the same as those shown in FIGS.1 and 4 are given the same reference numbers. An altered execution process data 214-2 and a processing unit 250-3 corresponding to the altered execution process data 214-2 are also shown in FIG. 6.

The unaltered execution process data 214-1 is obtained by the compile process of objects complexly combined in "the combination of objects not including the altered object". Thus, it is difficult to grasp the substance of the unaltered execution process data 214-1. As a result, it is difficult to process the unaltered execution process data 214-1 in accordance with the interpreter method as described above with reference to FIG.4. In this case, the unaltered execution process data 214-1 is returned to various objects combined with each other in "the combination of object not including the altered object". The altered object 230-1 is added to theses objects, and the developing process of the objects including the altered object 230-1 is performed so that the altered execution process data 214-3 is obtained. In this case, before the developing process is performed, it is determined by simulation whether or not the process with respect to "the combination of objects including the altered object 230-1" is normally performed. The process is performed on trial based on "the combination of objects including the altered object 230-1". It is then checked whether or not the system is normally operated on trial, as in step S2 shown in FIG.2.

In the processing unit set 250-3 corresponding to the altered execution process data 214-3 includes the process unit b corresponding to the altered object 230-1 as shown in FIG.6.

As has been described above, the unaltered execution process data 214-1 and the altered execution process data 214-3 are obtained, and the object management portion 220 switches the process using the unaltered execution process data 214-1 to the process using the altered execution process data 214-2. The altered execution process data 214-3 may be transmitted to the first terminal station 101 via the network 103 such as the LAN and switched network.

FIG.7 shows the process performed in accordance with the interpreter method after reconstituting steps of the process. In FIG.7, those portions which are the same as those shown in FIG.6 are given the same reference numbers.

When the altered execution process data 250-3 is generated, the function designed in the altered object 230-1 is executed, as described above with reference to FIG.6. However, if only the altered execution process data 250-3 exists in the system, it is difficult to return to the unaltered execution process data 250-1. In addition, if the altered executing processing data 250-3 has a sufficiently large amount of information, a storage unit having a large capacity is required in order to store both the unaltered executing processing data 250-1 and the altered executing processing data 250-3. Further, there is a high additional cost in order to transmit the unaltered execution process data 250-1 and the altered executing process data 250-3.

To eliminate the above disadvantages, it is preferable that difference data corresponding to a difference between the unaltered execution process data 250-1 and the altered execution process data 250-3 be made as shown in FIG.7.

Referring to FIG.7, when the altered execution process data 250-3 is made, the difference data 250-4 corresponding to a difference between the altered execution process data 250-3 and the unaltered execution process data 250-1. In other words, the difference data 250-4 is made so that the altered execution process data 250-3 is obtained by the process of the unaltered execution process data 250-1 being related to the difference data 250-4. When the process corresponding to the altered object 230-1 is performed, the communication between the unaltered execution process data 240-1 and the difference data 240-4 is performed under a control of the object management portion 220, so that the process of the altered execution process data 250-3 is performed, as has described above with reference to FIG.4.

A description will now be given of examples of objects and operations of the object management portion 220.

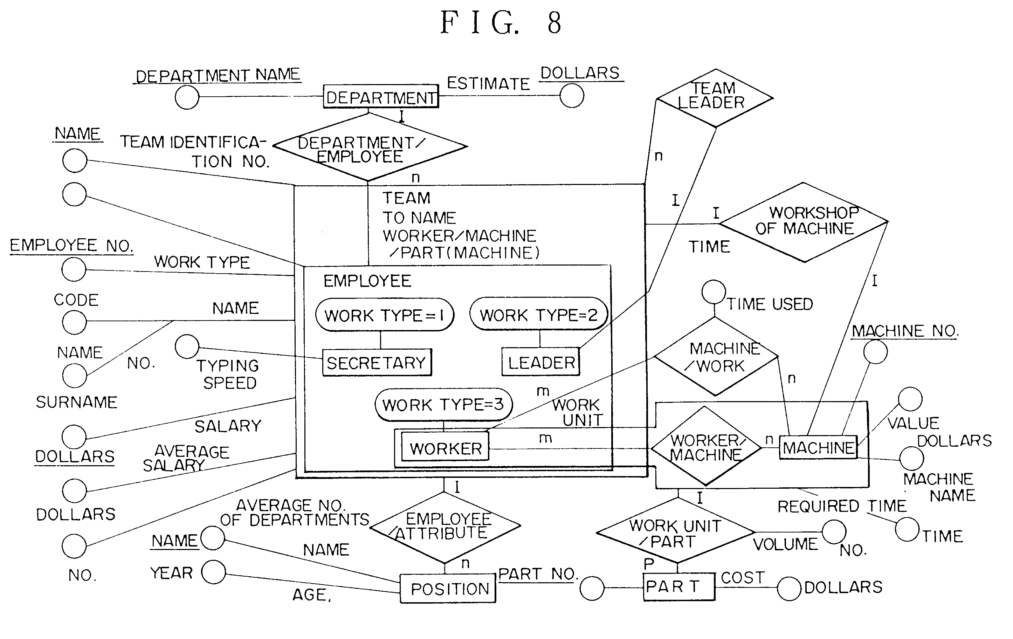

FIG.8 shows a real world, that is, example of a model for departments of a company. Within a box representing "employees" in FIG.8, there is a "secretary" belonging to a "work type = 1", a "leader" belonging to a "work type = 2", and a "worker" belonging to a "work type = 3". A box representing "employees" belongs to a box representing a "team".

The "leader" is related to the "team" under the relationship "team leader". In addition, the "worker" is related to a "machine" under the relationship "worker/machine" within the box representing "work unit".

The "team" and the "machine" are related to each other the relationship "machine/workshop". The "worker" and the "machine" are related to each other under the relationship "machine/worker". In addition, the "employee" and the "department" are related to each other under the relationship "department/employee".

Furthermore, the "employee" and the "position" are related to each other under the relationship "employee/attribute". The "work unit" and the "part" are related to each other under the relationship "work unit/part".

The following relationships also exist.
(1) The "department" is related to the object "department name" and the object "dollars".
(2) The "team" is related to the object "name" by a team identification number, related to the object "employee number" by the work type, related to the object "code name" and the object "surname" by the name, related to the object "dollars" by the salary, related to the object "dollars" by the average salary, and related to the object "number" by the average number of departments.
(3) The "secretary" is related to the object "number" by the typing speed.
(4) The "position" is related to the object "name" by the name, and related to the object "year" by the age.
(5) The "part" is related to the object "part number" and object "dollars".
(6) The "work/part" is related to the object "number" by the volume.
(7) The "work unit" is related to the object "time" by the required time.
(8) The "machine" is related to the object "machine number", the object "dollars" and the object "machine name".
(9) The "machine/work" is related to the object "time" by the time used.

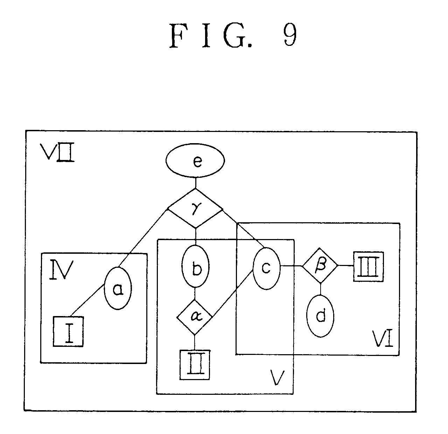

The model shown in FIG.8 can generally be represented as shown in FIG.9 if the "behavior" (or method) is indicated by a circular box, the "data" is indicated by a rectangular box, and the "relationship" is indicated by a rhombic box. In other words, (1) a method "a" and a data "I" are combined and function as one larger data "IV", (2) methods "b" and "c" are related to a data "II" by a relationship "a" and function as one larger data "V", (3) methods "c" and "d" are related to a data "III" by a relationship "β" and function as one larger data "VI", and (4) a method "e" is related to data "IV" and "V" by a relationship "γ" and function as a still larger data "VII". That is, the behaviors (or methods) are gathered and represented as a larger group.

Each circular box, rectangular box and rhombic box shown in FIG.9 can be treated as an individual object.

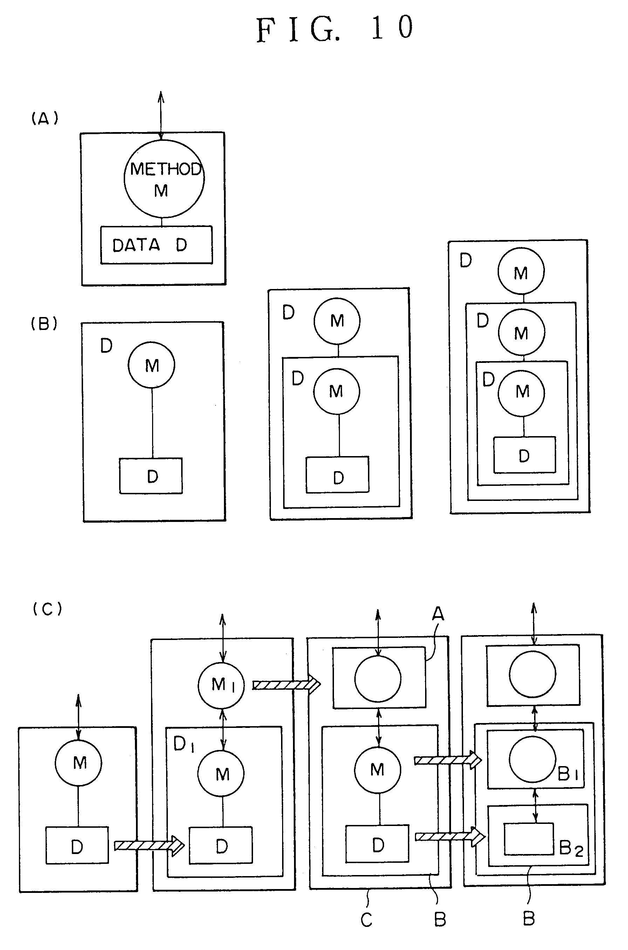

The forming of a capsule shown in FIG.10(A) will now be considered for a collection of the method "a" and the data "I" shown in FIG.9. In FIG.10(A), an opening is formed at the top end of the capsule to indicate that a message communication can be made. If this opening of the capsule were closed as shown on the left side of FIG.10(B), such a capsule would then correspond to the data "IV" which is a collection of the method "a" and the data "I" in FIG. 9. If a composite object is obtained by adding a method "M" to the data "D" (capsule) shown on the left side of FIG.10(B), the data shown at the central part of FIG.10(B) is obtained. Further, if a composite object is obtained by further adding a method to the data shown at the central part of FIG.10(B), the data shown on the right side of FIG.10(B) is obtained. Hence, FIG.10(B) shows the formation of composite objects by successively adding methods.

The formation of the composite objects is not limited to that shown in FIG.10(B). For example, composite objects may be formed as shown in FIG.10(C). In FIG.10 (C), the data "D" of the object shown on the leftmost side is replaced by an object which is made up of a method and data, as shown on the second leftmost side. In this case, a message passing is required between a method "M1" and a data "D1", and the method "M1" becomes one object as shown on the second rightmost side in FIG.10(C). As a result, objects "A" and "B" exists within an object "C", and the message passing exists between the objects "A" and "B".

Furthermore, if the method "M" of the object "B"is replaced by an object "B1" and the data "D"of the object "B" is replaced by an object "B2", both the objects "B1" and "B2" exist within the object "B" and the message passing exists between the objects "B1" and "B2" as shown on the rightmost side in FIG.10(C).

Therefore, the composite objects are formed by successively combining the objects. For example, the so-called primitive objects which will be described later are combined to form a capsule object, the capsule objects are combined to form an event object, and the vent objects are combined to form a system object.

The data "D" described above is generally made up of a plurality of process units which are the subject of the processing. On the other hand, the method "M" may be considered as information or an information group instructing how the plurality of processing units are to be utilized. The object which is represented in FIG.10 is a "processing unit" which is treated as an individual "processing unit" or a collection of "individual processing units".

As shown in FIG.9, the individual objects "I", "II" and "III" form a part of the larger objects "IV", "V" and "VI". In addition, the objects "IV", "V" and "VI" form a part of a still larger object "VII". In other words, the objects "IV", "V" and "VI" are in an "is-a" relationship or a "part-of" relationship with the object "VII" when viewed from the object "VII".

If the objects "I". "II" and "III" are regarded as minimum units, these objects "I", "II" and "III" may be said to be primitive objects. The capsule object is formed by a collection of such primitive objects. The event object is formed by a collection of such capsule objects. Furthermore, a still larger system object is formed by a collection of such event objects.

The objects described above which are made up of a collection of smaller objects are respectively referred to as a composite object. The primitive object is included in the concept of the composite object. However, the primitive object is an object of the minimum unit as described above. For this reason, when a reference is generally made to a "composite object" or an "object", it is better to exclude the primitive object which exists by itself and cannot be further decomposed.

The object in the capsule form is generally made up of the composite objects described above in the capsule form.

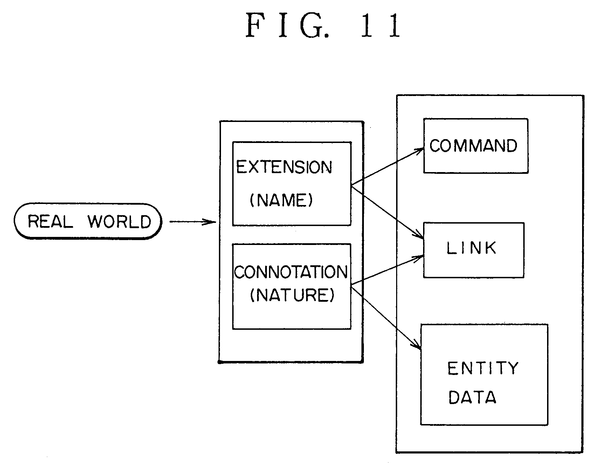

The individual objects can be represented by the following model. That is, FIG.11 is a diagram for explaining the object as a model.

A thing of the real world, such as a photograph, can be specified by the name which describes the photograph, and nature of the photograph. The nature of the photograph indicates what kind of picture the photograph is, such as the person who took the picture and the time when the picture was taken. Hence, the photograph can be represented by a model using (i) the command which is used as the name specifying the photograph, (ii) the actual picture (entity data) of the photograph formed of black and white dots, and (iii) the link which describes the nature of the photograph, the location where the actual picture is stored, a relationship of the people in the photograph and the like.

The individual object described above can also be represented by a model such as that shown in FIG.11 using the command, the link and the entity data.

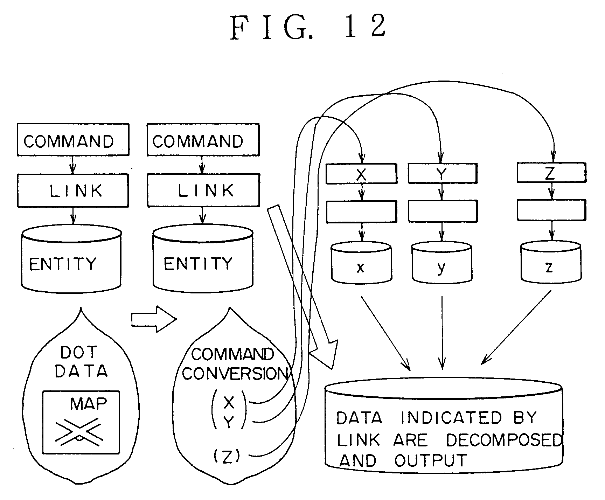

FIG.12 is a diagram for explaining the functions of the object as a model. As shown on the left side of FIG.12, the object can be described using the command, the link and the entity data. It may be regarded that the dot data shown in FIG.12 is given to the entity data. The capsule object, the event object and the system object are generally given a description specifying other objects X, Y and Z as the entity data, related to these other objects X, Y, and Z, and use entity data x, y and z of those other objects X, Y and Z as shown on the right side of FIG.12.

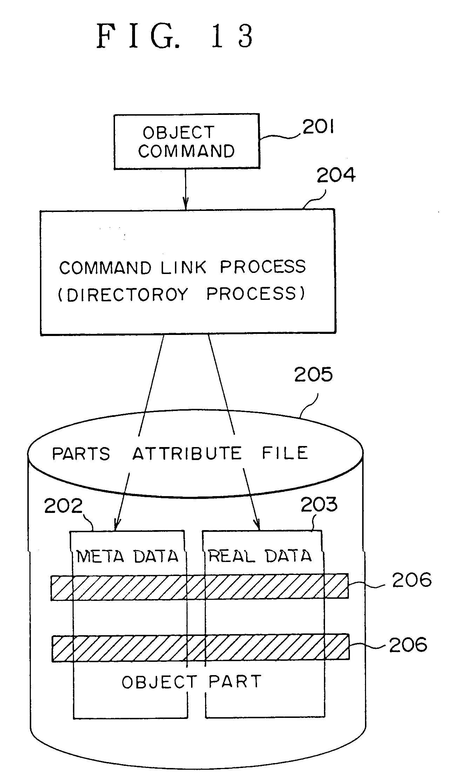

FIG.13 is a diagram for explaining the processing of treating the object. An object command 201 shown in FIG.13 is the same as the commands shown in FIGS.11 and 12. In other words, the object command 201 is the name for specifying the object. A meta data 202 shown in FIG.13 corresponds to the links shown in FIGS.11 and 12. That is, the meta data 202 is data (description of real data) describing the real data with significance, such as the name, comment and command. In addition, the "is-a" hierarchy relationship, and the sequential relationship between the objects are described in the meta data 202. The comment is a description which significantly describes what the real data is when describing the real data. In other words, the comment may take the form of a general flow chart, a detailed flow chart or a source program. An entity data (real data) 203 shown in FIG.13 corresponds to the entity data shown in FIGS.11 and 12, and the program for executing the process is treated as one real data.

A command/link processor 204 shown in FIG.13 is also referred to as a directory processor. When one new object is formed, a command (also referred to as an object command) which is the name of this object is set. In addition, storage locations for the real data 203 and the meta data 202 are allocated, and a command/link table is formed. In this case, the type of object is determined, thereby determining the size of the object. Then, measures are taken so that a combination of the meta data 202 and the real data (entity data) 203 can be input and output using the command/link table. The above combination of the meta data 202 and real data 203 will be named an object part 206. The object part 206 can be specified using the object command.

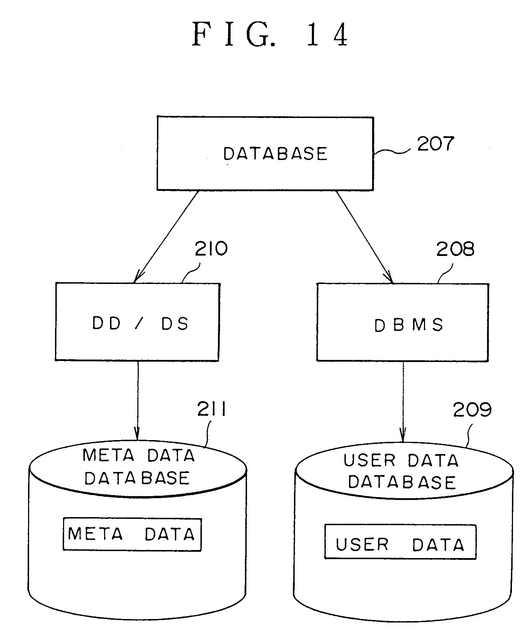

FIG.14 shows the structure of a database system. The database system shown in FIG.14 includes a data base 207, a data base management system (DBMS) 208, a user database 209, a data dictionary and directory system (DD/DS) 210, and a meta data database 211. The structure of such a database system is known.

The user data database 209 collectively stores the user data. The DBMS 208 centrally controls the user data database 209, and carries out processes such as generation, deletion, correction and input/output with respect to the user data.

On the other hand, as the number of individual user data increases and the volume of the individual user data increases, the meta data are formed to give descriptions such as explaining the role of the individual user data. The meta data database 211 collectively stores the meta data. The DD/DS centrally controls the meta data database 211.

The object part 206 in the parts attribute file 205 shown in FIG.13 may be regarded as a collection of the user data within the user data database 209 shown in FIG.14 and the meta data within the meta data database211 shown in FIG.14. Of course, in the conventional database system, the DBMS 208 and the DD/DS 210 shown in FIG.14 operate independently, and accesses to the contents of the user data database209 and the contents of the meta data database211 are made independently. But in the case shown in FIG.13, the real data 203 and the meta data 202 are combined and treated as one object part 206 by specifying the object part 206 by the object command.

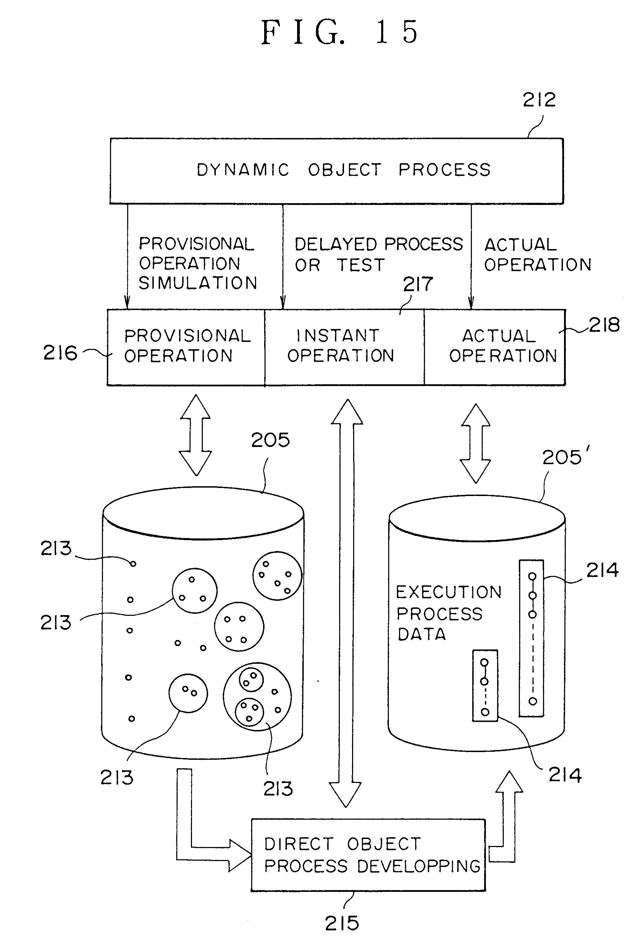

FIG.15 is a diagram for explaining a part of the operation of a dynamic object processor. A dynamic object processor 212 shown in FIG.15 has a provisional operation mode 216 for making a simulation or the like, and instant operation mode 217 for making a test or the like, and an actual operation mode 218 for making a data processing or a communication with another terminal station.

The parts attribute file 205 shown in FIG.15 corresponds to the parts attribute file 205 shown in FIG.13. On the other hand,the parts attribute file 205' shown in FIG.15 stores the execution process data 214 which is obtained by compiling all or a part of the contents of the parts attribute file 205 into a form that is suited for executing the actual operation at a high speed. The execution process data 214 for the case of an object program for executing the process is generally made up of several tens to several hundreds of steps which are coupled in series in the processing sequence of the processing units.

Objects 213 shown in FIG.15 are the objects described above. More particularly, the objects 213 may generally include the primitive object, the capsule object, the event object and the system object. As described above in conjunction with FIG.13, it may be regarded that the objects 213 are stored in the form of object parts 216 so that the object parts 216 can be specified by the corresponding object commands.

A direct object process developing process 215 shown in FIG.15 develops the individual objects 213, or develops a plurality of objects 213 in a collective manner, and obtains the execution process data 214.

As described above in conjunction with FIG.10, the data are generally gathered into a process unit in the form of a composite object, and becomes a unit which displays a behavior for executing a process which has a certain target. Such composite objects are stored in the parts attribute file 205 in the form of the object parts 206 which are specified by the object commands 201 as shown in FIG.13.

When generating a new processing function, a new object is generated so that the new processing function can be obtained. Alternatively, existing objects are coupled depending on the common target, so as to form a new object which can exhibit the new processing function. The above new object is prepared as one of the object parts 206.

When the object is generated, a simulation is made to determine whether or not the object actually functions correctly. Alternatively, a provisional operation may be carried out with respect to the object for which the simulation has been made. The above processes correspond to the provisional operation mode 216 shown in FIG.15. The dynamic object processor 212 utilizes the contents of the parts attribute file 205, and a simulation of a desired operation is made.

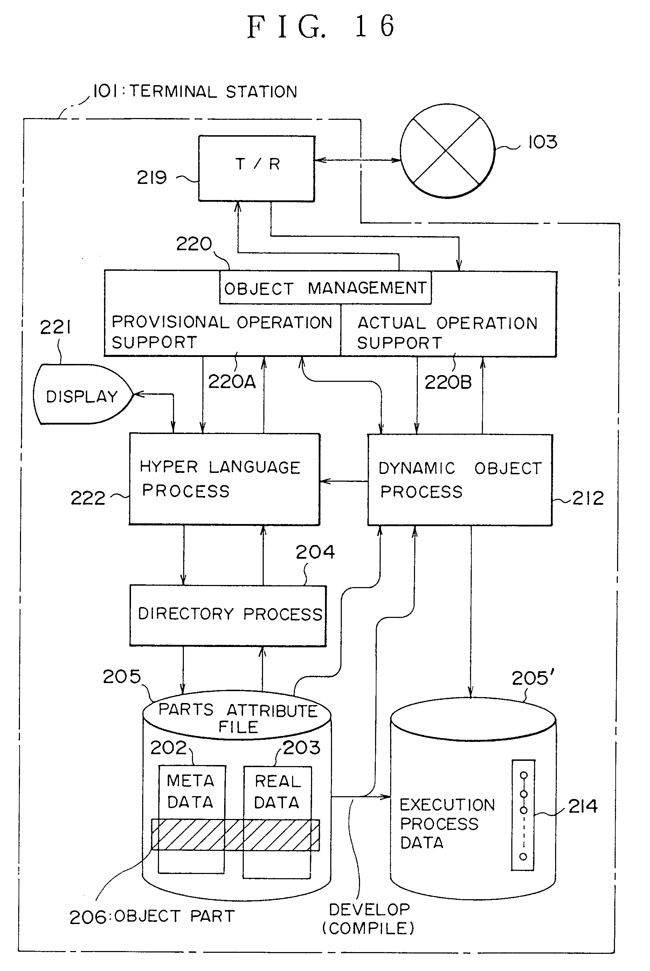

The object 213 or the object group which operates normally as result of the provisional operation mode 216 is developed into the execution process data 214, that is, compiled into one execution process data 214, because a large amount of communications would be required with the object management portion 220 shown in FIG.16 and the processing speed would be slow if not so developed. This developing process is carried out by the direct object process developing process 215 shown in FIG.15, and the execution process data 214 is stored in the parts attribute file 205.

In the dynamic object processor 212, a delayed process is temporarily made with respect to a predetermined process by utilizing the contents of the parts attribute file 205 or, the direct object process developing process 215 is started to generate the execution process data 214 if a test process or the like needs to be made. In FIG.15, such processes are shown as the instant operation mode 217.

The actual operation mode 219 shown in FIG.15 is a mode in which the actual operation is made using the execution process data 214.

In the meta data within the parts attribute file 205, it may be regarded that there exist the significant data related to the nature of the object, the description instructing the coupled relationship with respect to the object (object indicated by "is-a") of a higher hierarchy when viewed from its own object, and the description instructing the coupled relationship with respect to the object (object indicated by "part-of) group of a lower hierarchy included in its own object.

FIG.16 shows the structure of the terminal station used in the embodiment of the data processing system according to the present invention. In FIG.16, those parts which are the same as those corresponding parts in the previously described figures are designated by the same reference numerals. In FIG.16, the elements 101, 203, 204, 205, 205', 206, 212 and 214 correspond to those shown in FIG.13 and 15. The terminal station 101 shown in FIG.16 carries out a process using the execution process data 214 or makes a communication with another terminal station (not shown) via the network 103 such as a LAN and a switched network .

The transmitter/receiver 219, the object management portion 220, a display 221, a hyper language processor 222 and the like are provided within the terminal station shown in FIG.16.

The directory processor 204 shown in FIG.16 carries out the process described above with reference to FIG.13. In addition, the dynamic object processor 212 shown in FIG.16 carries out the process described above with reference to FIG.15.

A provisional operation support 220A of the support function corresponding to the operation up to the start of the provisional operation mode 216 shown in FIG.15. An actual operation support 220B of the object management portion 220 shown in FIG.16 is a support function corresponding to the operation up to the start of the actual operation mode 218 shown in FIG.15.

The hyper language processor 222 shown in FIG.16 has a "parts display/select" function, and retrieves and outputs from the display 221 an object part which is usable. If a suitable object part does not exist, a part is specified as a new object part by using a "part specify" function. It is possible to generate a class object part by an "attribute set" function, and to generate an instance object part by a "schema function" or the like.

The "part display" function using the display 221 includes (i) content display for outputting names and comments, (ii) display of attribute and schema indicating the content of the object part, and (iii) display of class attribute and instance constant, which are meta data of the object part.

A "parts combining" function of the hyper language processor 222, that is, the function of combining the object parts and obtaining a larger composite object part, includes functions for adding, changing and deleting the attribute related to the class formation , and functions for adding, changing and deleting schema related to the instance constant.

A "user image forming" function of the hyper language processor 222 inputs data of the image into a buffer of an "image formation and display" class to form an instance when forming and displaying the image. For this reason, the "user image forming" function corresponds to forming the image class into an instance.

A "provisional operating" function of the hyper language processor 222 temporarily realizes a capsule shown in FIG.10 in a temporary memory by linking a method indicated by the class when the instance receives a message, so as to execute the behavior of the corresponding capsule.

A "part change" function of the hyper language processor 222 changes the object part by changing, adding and deleting the attribute or schema. In addition, a "part registering" function of the hyper language processor 222 registers the object part in the parts attribute file 205 in correspondence with the object command (name of the object part).

The "developing (compiling)" shown in FIG.16 represents the direct object process developing process 215 shown in FIG.15. In the developing process, the development is made to an execution process data 214 which is as large as possible depending on the size of the temporary memory of the data processing system.

The object management portion 220 controls the hyper language processor 222 shown in FIG.16, so as to hold the object part 206 in the parts attribute file 205 as described above. In addition, the object management portion 220 controls the dynamic object processor 212 shown in FIG.15 to carry out operations such as the provisional mode 216, the instant operation mode 217 and the actual operation mode 218. In addition, depending on a message reception via the network 103 such as the LAN or the switched network, the object management portion 220 starts the instance in the provisional operation mode 216, operates the data processing system by provisionally forming the capsule in the temporary memory, and makes a message transmission based on the result of the processing. Of course, if an execution process data 214 which has already been developed exists, the developed execution process data 214 is executed to make message transmission to the remote terminal station.

When carrying out the process within the home terminal station 101, the desired object part may not exist within this terminal station 101. In addition, the attribute and/or schema may not exist. In such cases, a learning process is carried out by the home terminal station j101 by entering the missing object part, attribute and/or schema in response to a data transfer which is received from the remote terminal station via the network 103 such as a LAN or a switched network.

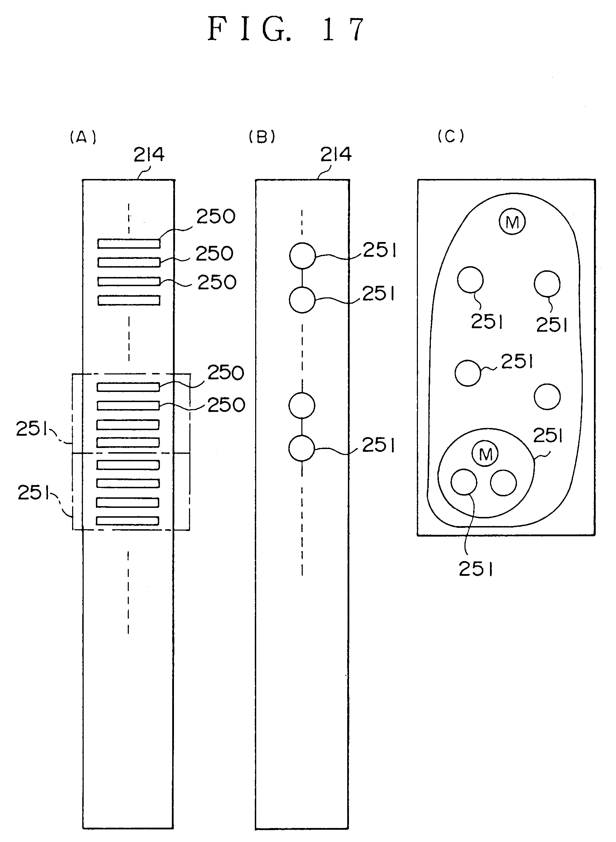

FIG.17 is a diagram for explaining the advantages of forming the objects in the form of the capsule. If the execution process data 214 is taken as an example, the execution process data 214 may be given as a series of commands (or command group) 250 which are coupled in the processing sequence as shown in FIG.17(A). An arbitrary number of these commands (or command group) 250 are combined to form a processing unit 251 which executes a predetermined process, that is, has a certain behavior.

Accordingly, the execution process data 214 shown in FIG.17(A) may be regarded as series of processing units 251 which have certain behaviors and are coupled in the processing sequence as shown in FIG.17(B). The serialized execution process data 214 shown in FIG.17(B) as whole carries out a specific operation. Hence, an execution process data 214 for carrying out another process is given as a different execution process data in which the processing units 215 are coupled in a different combination.

As the existing process units 251 having different behavior increase considerably in number, the individual processing units 251 are integrated under a predetermined method "M" as shown in FIG.17(C) depending on the needs. In this case, it is also possible to carry out the same operation as the execution process data 214 shown in FIG.17(B).

It may be regarded that the integration of the processing units 251 shown in FIG.17(C) corresponds to the forming of the capsule described above with reference to FIG.10(C).

As has been described above, due to introducing the altered object, the program which is currently executed is altered, and a new program altered in the desired manner can be executed.

In FIGS.4 to 7, only one part of processing units in the unaltered execution process data 250-1 is changed in the process into which the altered object has been introduced. However, of course, a plurality of processing units can be changed .

The above altered object may be used to:
(A) gather parameters at a time a predetermined condition state occurs;
(B) change the program under a condition in which a predetermined condition state occurs; and
(C) change the program from an old version to a new version.

The present invention is not limited to the aforementioned embodiments, and variations and modifications may be made without departing from the scope of the claimed invention.

## Claims

1. A data processing system for executing a process corresponding to a combination of objects (213), each of the objects (213) being a single processing unit and/or a complex processing unit in which processing units are combined, characterized in that said data processing system comprises:
first means (220) for obtaining the combination of objects (213) including at least one altered object (230) which is an object corresponding to a function to be altered; and
second means (102) for executing a process in accordance with an altered program corresponding to the combination of the objects (213, 230) obtained by said first means.

2. The data processing system as claimed in claim 1, characterized in that said second means (102) has object management means (220) for controlling objects in said combination, the process being executed by said second means (102) as the altered object (230) is in communication with said management means (220) and/or other objects (213) in said combination.

3. The data processing system as claimed in claim 2, characterized in that said altered object (230) is incorporated into one or a plurality of objects in said combination of the objects (213, 230).

4. The data processing system as claimed in claim 2, characterized in that at least one of the objects (213, 230) in said combination is formed of execution process data items which are developed in an executing order of serial processes including a branch.

5. The data processing system as claimed in claim 2, characterized in that each of the objects (213, 230) in said combination is formed of execution process data items which are developed in an executing order of serial processes including a branch, so that said whole combination of the objects (213, 230) including said altered object (230) is made up of altered execution process data having the execution process data items of the respective objects in said combination.

6. The data processing system as claimed in claim 1, characterized in that some or all of objects (213) in said combination of the objects not including said altered object (230) are formed of execution process data items which are developed in an executing order of serial processes including a branch, so that unaltered execution process data having the execution process data items of the respective objects in said combination of the objects not including said altered object is obtained, wherein some or all of objects (213, 230) in said combination of the objects including said altered object (230) are formed of execution process data items which are developed in an executing order of serial processes including a branch, so that altered execution process data having the execution process data items of the respective objects in said combination of the objects including said altered object is obtained, and wherein said processing system comprises selecting means for selecting the unaltered execution process data or the altered execution process data as data to be used in the process.

7. The data processing system as claimed in claim 6, characterized in that the altered execution process data is calculated using the unaltered execution process data and a difference (250-4) between the altered execution process data and the unaltered execution process data.

8. The data processing system as claimed in claim 4, characterized in that, after it is determined, based on a simulation of a process corresponding to the combination of the objects (213, 230) including said altered object (230), that the process is normally operated, the execution process data items are developed in the executing order of the serial processes including the branch so that at least the one object in said combination is obtained.
